(19) Europäisches Patentamt
European Patent Office
Office européen des brevets

(11) Publication number: 0 368 481 A2

(12) **EUROPEAN PATENT APPLICATION**

(21) Application number: 89310444.8

(22) Date of filing: 12.10.89

(51) Int. Cl.5: C07F 7/18, C08G 77/04, C07F 7/08, C07F 7/10

(30) Priority: 14.10.88 US 257961

(43) Date of publication of application: 16.05.90 Bulletin 90/20

(84) Designated Contracting States: AT BE CH DE ES FR GB GR IT LI LU NL SE

(71) Applicant: MEDEX, INC.
3637 Lacon Road
Hilliard Ohio 43026(US)

(72) Inventor: Davis, Robert C.
1723 Grace Lane
Columbus OH 43220(US)
Inventor: Markle, Richard A.
1083 Norway Drive
Columbus OH 43221(US)

(74) Representative: Allen, Oliver John Richard et al
Lloyd Wise, Tregear & Co. Norman House
105-109 Strand
London, WC2R 0AE(GB)

(54) **Immobilized fluorophores for oxygen sensors.**

(57) The present invention relates to new fluorophore compounds that are permanently covalently immobilizable in a gas-permeable support material and which are useful in the continuous measurement of blood-oxygen concentrations. The compounds comprise polycyclic aromatic hydrocarbons, or substituted derivatives thereof, with cross-linking groups thereon.

EP 0 368 481 A2

# IMMOBILIZED FLUOROPHORES FOR OXYGEN SENSORS

## Background of the Invention

The present invention relates to new compounds useful in the continuous measurement of blood gas concentrations, and more particularly to a fluorophore compound that is covalently immobilizable in a gas-permeable support material.

Various means for monitoring the blood-oxygen level in the cardiovascular system have been proposed. For example, blood oxygen can be estimated by in vivo optical measurement of hemoglobin saturation, by a transcutaneous sensor, or by withdrawing samples for a blood gas measurement instrument which determines the oxygen level. All of these methods have disadvantages in practicality, reliability, safety, or general applicability. A more recent development in the area of blood oxygen measurement pertains to use of a fiber optic sensor for measuring the partial pressure of oxygen in the blood ($P_{O2}$) from which the oxygen concentration can be determined.

The operation of fiber optic $P_{O2}$ sensors is based upon the principal of fluoresence quenching by oxygen. It is known that the fluoresence of certain aromatic hydrocarbons is quenched by molecular oxygen. The relationship between fluorescence quenching and quencher concentration (in this case, oxygen concentration) is given by the following equation, known as the Stern-Volmer equation:

$$F_o/F = 1 + K \cdot [O_2]$$

wherein $F_o$ is the fluorescence intensity of an indicator in the absence of a quencher, F is the intensity in the presence of a quencher, K is the quenching constant and $[O_2]$ is the concentration of the quencher, in this case oxygen. A discussion of the Stern-Volmer relationship is found in Wolfbeis, O.S., et al, Mikrochimica Acta, pp. 153-158 (Wien 1984), and that discussion is incorporated herein by reference.

Based on the above relationship, various oxygen sensing devices have been proposed in which a fluorescent substance is used as the oxygen indicator. Typically, a light source communicates with the fluorescent substance, which is exposed to the blood, by means of optical fibers and the fluorescence and quenching thereof are monitored to determine the blood oxygen concentration. A critical part of this type of oxygen sensor is the fluorescent indicator substance and the means by which it is immobilized and exposed to the blood. For example, it is known to dissolve a fluorescent indicator substance in a polymer, soak the indicator into porous glass, or adsorb the indicator onto a rigid surface, and then expose the sensor to the blood. One drawback of such methods of immobilization is the tendency of the indicator to be washed-out by the blood. That is, the indicator is physically removed from the sensor by the action of the blood, thereby affecting the reliability, accuracy and longevity of the sensor.

In Peterson, U.S. Patent No. 4,476,870, a fiber optic $P_{O2}$ probe is disclosed in which two strands of plastic optical fiber are disposed within a length of porous polymer tubing serving as a jacket or envelope for the fibers. The tubing is packed with a suitable fluorescent light-excitable indicator placed on a porous adsorptive particulate polymer support. The tubing or jacket is generally made of a hydrophobic, gas permeable material, which permits the blood oxygen to diffuse through and quench the fluorescent indicator. There are two problems associated with systems such as that disclosed in Peterson when the system is to be maintained for a long period of time. First, because the fluorescent indicator is merely adsorbed onto the polymer support, it tends to diffuse or migrate into adjacent materials which are in contact with the indicator support material, particularly when the adjacent material is a better solvent for the fluorescent indicator than is the polymeric support. A second related problem is that some fluorescent indicators tend to diffuse and aggregate; that is, the indicator molecules combine or bond to other indicator molecules, and this causes self-quenching which also adversely affects the accuracy, reliability and longevity of the oxygen sensor.

## Summary of the Invention

The present invention solves the problems of wash-out, diffusion and aggregation of certain fluorescent molecules useful in fiber optic blood oxygen sensors by providing new compounds which are permanently covalently immobilizable within a support material such that they are not subject to wash-out, diffusion or aggregation.

Aromatic hydrocarbon compounds capable of fluorescing are known as fluorophores. One aspect of the present invention is directed to new fluorophore compounds which comprise fluorescing polycyclic aromatic hydrocarbons, or substituted derivatives thereof, having a cross-linking group. The cross-linking group of the fluorophore compound effects the covalent immobilization of the fluorophore compound in an oxygen-permeable support material, preferably silicone rubber. The oxygen-permeable support material with the fluorophore compound immobilized therein is useful as the sensor portion of a fiber optic $P_{O2}$ measuring device and makes up another aspect of the present invention.

In order to covalently bond and immobilize and fluorophore compound within the silicone rubber support material, the fluorophore compound is employed as a cross-linking/curing agent in place of some or all of the curing agent (for example ethyl triacetoxysilane) typically used for curing silicone liquid oligomers or rubber containing reactive silanol (SiOH) groups, or groups readily hydrolyzed to silanol groups, in the presence of water. These include silanol terminated polydimethylsiloxanes typified by Petrarch products PS 340 through PS 347.5, listed in Petrarch Systems "Silicon Compounds, Register and Review", Edition S-7, p.267, 1987. These are silanol terminated polydimethylsiloxanes with molecular weights ranging from 400-700 to 110,000 and viscosities ranging from 15-35 to 50,000 centipoise. They also include silanol terminated, aromatic (phenyl containing) siloxanes typified by PS 080 to PS 090 on page 280 of the aforementioned Petrarch Edition S-7, or combinations of these phenyl containing polysiloxanes and the aforementioned polydimethylsiloxanes. It also includes polydimethyl, or phenyl containing, siloxanes, with latent silanol groups, such as acetoxy terminated polydimethylsiloxanes, typified by Petrarch PS 363.5, methoxy terminated oligomers typified by Petrarch PS 393 or PS 395, as listed on page 267 of Petrarch S-7. Polydimethylsiloxanes, or phenyl containing siloxanes, with various latent silanol end groups may thus be utilized. These groups include the following: acetoxy, acyloxy, alkoxy, acylamide, methylethylketoxime, pent-2-en-4-one, dialkylamino and alkylamino. The reaction of these end groups with water to produce silanol end groups, and the cross-linking reaction of the subsequently produced polydisilanols with various trifunctional crosslinking agents with the same range of latent silanol reactive groups, as described below, is enhanced by the presence of catalysts such as organotin compounds, including stannous octoate or dibutyltindilaurate. In fact the crosslinking reactions may proceed at practical rates, or to practical levels or completion at desirable temperatures, only when such catalysts are present. The cross-linking group of the fluorophore compound serves the same function as known cross-linking/curing agents for silicone rubber --that is, cross-linking the chains of silicone elastomers-- and preferably contains at least one silicone atom. As a result, the fluorophore compound is covalently bonded within the silicone rubber matrix and is incapable of washing or diffusing out of the silicone rubber or diffusing to other fluorophore compounds to form quenching aggregates.

As mentioned, the first aspect of this invention is a fluorophore compound comprising a fluorescing polycyclic aromatic hydrocarbon having a cross-linking group. Several different commercially available fluorophores may be used as the starting material for the new fluorophore compounds of this invention. For example, pyrene, fluoranthene, coronene, decacyclene and substituted derivatives thereof may be converted into covalently immobilizable compounds as will be more fully described. Vinyl pyrene is a preferred fluorophore starting material.

Silanes, which are compounds similar to hydrocarbons in which tetravalent silicon replaces the carbon atom, are useful as cross-linking agents for silicone rubber. For example, ethyl triacetoxysilane has been used as a silicone rubber curing agent. In keeping with the second aspect of the present invention, that is, a fluorophore compound which is covalently immobilized in a support material such as silicone rubber, it is necessary to choose a silane starting material that can be linked to the fluorophore starting material and then acetylated to form the cross-linking/cure group portion of the fluorophore compound.

The present invention comprehends the following cross-linking groups for the fluorophore compound: triacetoxysilane, triacyloxysilane, trialkoxysilane, tris(acylamide)silane, tris(methylethyketoxime)silane, tris(pent-2-en-4-one)silane, tris(dialkylamino)silane and tris(alkylamino)silane. Each of the above cure groups is tri-functional, i.e., each has three reactive (condensation) sites which can cure the liquid silicone oligomers or rubber via water vapor activation. When the cross-linking group of the fluorophore compound is tri-functional, it is not necessary to supplement the curing of the silicone rubber by the addition of an additional curing agent. However, since the invention is not to be limited to fluorophore compounds with tri-functional cure groups thereon, it should be appreciated that where the cure group is di- or mono-functional it may be necessary to add an additional curing agent to ensure adequate curing of the silicone rubber.

It should also be noted that when latent silanol polymers are used it is preferable that the by product groups of hydrolysis such as acetic acid, alcohols, amides, ketones, amines, and so on, be chemically compatible with the byproducts from the curing agents. It is preferable, and may be necessary, to avoid byproduct combinations which can react. For example acetic acid and dimethyl amine will form a nonvolatile, possibly objectional, salt residue.

A preferred fluorophore compound of this invention is shown by the following structure:

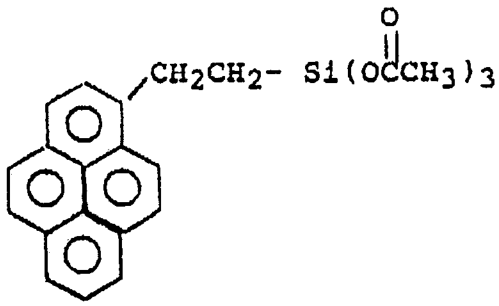

In this fluorophore compound, the $-Si(O\overset{O}{\overset{\|}{C}}CH_3)_3$ group is the cross-linking/curing group. Vinyl pyrene is the fluorophore starting material used in the synthesis of this compound. In a first step, the vinyl pyrene is hydrosilylated with trichlorosilane in the presence of a platinum catalyst, e.g., chloroplatinic acid, and an inert organic solvent, e.g., methylene chloride. A discussion of hydrosilylation is found in Petrarch Systems "Silicon Compounds, Register and Review", pp. 11-12 (© 1987), and is incorporated herein by reference. The reaction product is then acetylated with acetic acid/acetic anhydride in the presence of heat to form the fluorophore compound shown. It will be appreciated by those skilled in the art that the invention comprehends using any of the mentioned fluorophores or substituted derivatives thereof as the fluorophore starting material and that silanes other than trichlorosilane may be used as the starting material to form the cross-linking/cure group portion of the fluorophore compound.

The $P_{O2}$ sensing material produced by cross-linking the fluorophore compound in silicone rubber is used in conjunction with a $P_{O2}$ measuring device such as that disclosed in co-pending application Serial No. 07/155,964, filed February 16, 1988. By means such as optic fibers, the silicone rubber laden with a fluorophore compound is subjected to light energy which excites the fluorophore compound thereby causing it to fluoresce with a certain measurable intensity. The fluorescence intensity of the immobilized fluorophore is proportional to the concentration of oxygen in the blood and varies during continuous monitoring of the blood in response to variations in blood oxygen concentration due to the quenching effect oxygen has on the fluorophore. Thus, the blood oxygen concentration can be continuously calculated from the fluorescence intensity which is continuously monitored.

## Detailed Description

The following examples are prophetic in nature and are illustrative of the synthesis of the fluorophore compound and sensing material of the present invention.

### EXAMPLE 1

#### Synthesis of Triacetoxy Silyl Ethyl Pyrene

Vinyl pyrene (commercially available) is reacted with trichlorosilane ($HSiCl_3$) in an inert organic solvent, methylene chloride, and in the presence of a platinum catalyst, chloroplatinic acid, to form an intermediate reaction product. The intermediate reaction product is then reacted with acetic anhydride and acetic acid, with heat, to give the triacetoxy silyl ethyl pyrene.

### EXAMPLE 2

#### Production of the Blood-Oxygen Sensing Material

The triacetoxy silyl ethyl pyrene, as produced in Example 1, is used as a cross-linking/curing agent in a dibutyltindilaurate catalyzed polymerization reaction of Petrarch PS 085 silanol terminated (88-85%) dimethyl (12-15%) diphenyl siloxane copolymer to produce silicone rubber having triacetoxy silyl ethyl pyrene permanently immobilized therein.

### EXAMPLE 3

#### Production of the Blood-Oxygen Sensing Material

The triacetoxy silyl ethyl pyrene, as produced in Example 1, is used as a supplementary cross-linking/curing agent in the dibutyltindilaurate catalyzed polymerization reaction of Petrarch PS 085 silanol terminated (88-85%) dimethyl (12-15%) diphenyl siloxane copolymer, together with ethyl triacetoxysilane, to produce silicone rubber having triacetoxy silyl ethyl pyrene permanently immobilized therein.

It will be understood by those skilled in the art that various modifications may be made without departing from the spirit and scope of the invention and that the invention is not to be limited in any way except as defined by the scope of the appended claims.

## Claims

1. A fluorophore compound comprising:
a fluorescing polycyclic aromatic hydrocarbon or substituted derivative thereof having a cross-linking group, said cross-linking group for permanently covalently bonding the fluorophore compound to a cross-linkable polymer which is a gas permeable support material, said fluorescing hydrocarbon for sensing the presence of a gas upon light excitation.

2. A fluorophore compound as recited in claim 1 wherein said cross-linking group contains at least one silicon atom.

3. A fluorophore compound as recited in claim 1 wherein said cross-linking group is selected from a group consisting of:

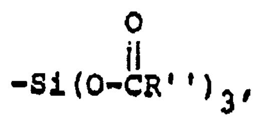
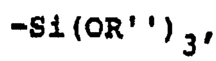
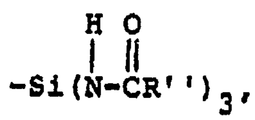
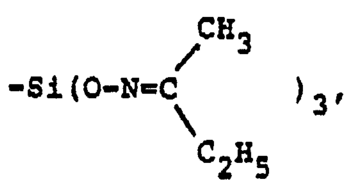
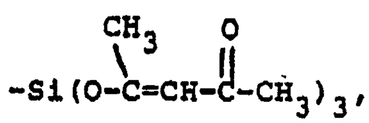

$-SI(NR''_2)_3$, and

$-SI(\overset{H}{N}R'')_3$, wherein R″ is selected from a group consisting of alkyl, cycloalkyl or halogenated derivatives thereof, with the proviso that the halogen is not bonded to a carbon atom alpha in a carbonyl group.

4. A fluorophore compound as recited in claim 3 wherein R″ is methyl or ethyl.

5. A fluorophore compound as recited in claim 1 wherein said fluorescing hydrocarbon is selected from a group consisting of fluoranthene, coronene and decacyclene, or substituted derivatives thereof.

6. A fluorophore compound as recited in claim 1 wherein said fluorescing hydrocarbon is pyrene or a substituted derivative thereof.

7. A fluorophore compound as recited in claim 1 having the structure wherein said fluorescing hydrocarbon is selected from a group consisting of pyrene, decacyclene, coronene and fluoranthene, or substituted derivatives thereof, and said cross-linking group and is selected from a group consisting of:

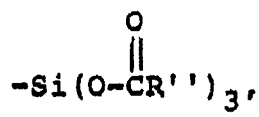
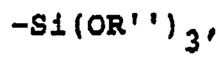
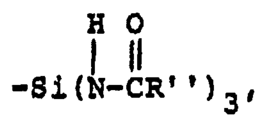
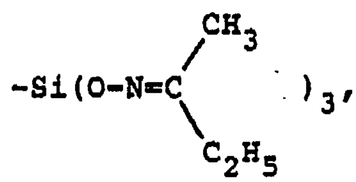
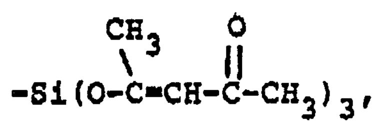

$-SI(NR''_2)_3$, and

$-SI(\overset{H}{N}R'')_3$, wherein R″ is selected from a group consisting of alkyl, cycloalkyl or halogenated derivatives thereof, with the proviso that the halogen is not bonded to a carbon atom alpha in a carbonyl group.

8. A fluorophore compound as recited in claim 7 wherein R″ is methyl or ethyl.

9. A fluorophore compound as recited in claim 7 having the structure:

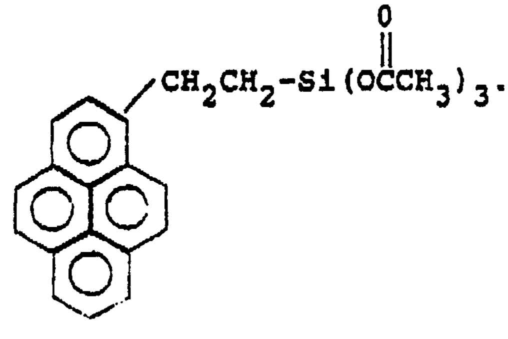

10. A sensor for sensing blood gases comprising:
a cross-linkable polymer support material which is permeable to a gas and a fluorophore compound permanently covalently bonded within said support material, said fluorophore compound comprising a

fluorescing polycyclic aromatic hydrocarbon or substituted derivative thereof having a cross-linking group for permanently covalently bonding said fluorophore compound within said support material, said fluorescing hydrocarbon for sensing the presence of a gas upon light excitation.

11. A sensor as recited in claim 10 wherein said support material is silicone rubber.

12. A sensor as recited in claim 10 wherein said cross-linking group contains at least one silicon atom.

13. A sensor as recited in claim 10 wherein said cross-linking group is selected from a group consisting of:

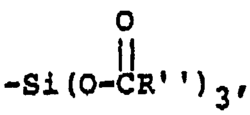

$-Si(OR'')_3$,

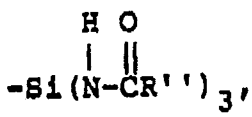

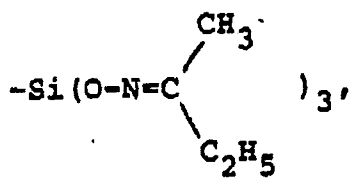

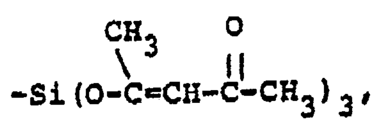

$-SI(NR''_2)_3$, and

$-SI(\overset{H}{N}R'')_3$, wherein R'' is selected from a group consisting of alkyl, cycloalkyl or halogenated derivatives thereof, with the proviso that the halogen is not bonded to a carbon atom alpha in a carbonyl group.

14. A sensor as recited in claim 10 wherein R'' is methyl or ethyl.

15. A sensor as recited in claim 10 wherein said fluorescing hydrocarbon is selected from a group consisting of pyrene, fluoranthene, coronene and decacyclene, or substituted derivatives thereof.

16. A sensor as recited in claim 10 wherein said fluorophore compound has the structure wherein said fluorescing hydrocarbon is selected from a group consisting of pyrene, decacyclene, coronene and fluoranthene, or substituted derivatives thereof, and said cross-linking group and is selected from a group consisting of:

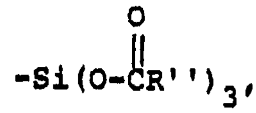

$-Si(OR'')_3$,

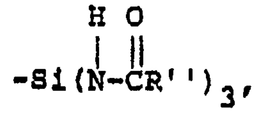

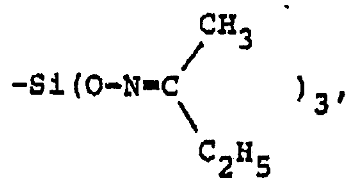

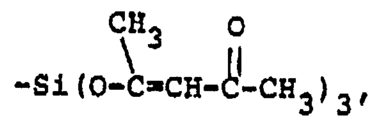

$-SI(NR''_2)_3$, and

$-SI(\overset{H}{N}R'')_3$, wherein R'' is selected from a group consisting of alkyl, cycloalkyl or halogenated derivatives thereof, with the proviso that the halogen is not bonded to a carbon atom alpha in a carbonyl group.

17. A sensor as recited in claim 16 wherein R'' is methyl or ethyl.

18. A sensor as recited in claim 17 wherein said fluorophore compound has the structure:

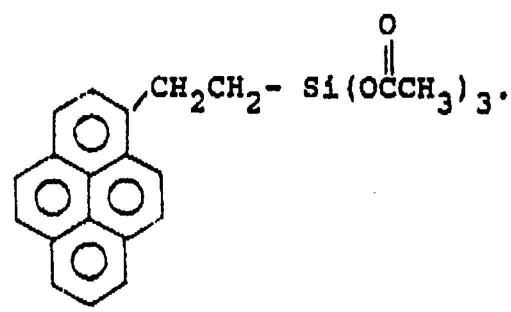

19. A compound for use in in vivo and in vitro monitoring of blood oxygen levels comprising silicone rubber and an oxygen-sensing fluorophore compound which is covalently bonded in said silicone rubber during curing thereof by employing said oxygen-sensing fluorophore compound as a cross-linking and curing agent for said silicone rubber.

20. The compound as recited in claim 19 wherein said oxygen-sensing fluorophore has the structure: